# EUROPEAN PATENT APPLICATION

(11) **EP 0 853 877 A1**
(43) Date of publication of application: **22.07.1998**
(21) Application number: 98610003.0
(22) Date of filing: 15.01.1998
(51) Int. Cl.: A01K 5/02

(54) **A feeding device, especially for pigs**

(30) Priority: 17.01.1997 DK 6597
(71) Applicant: A/S DANSK STALDINDUSTRI, 7400 Herning (DK)
(72) Inventor: Frydkaer, John, 7600 Struer (DK)
(74) Representative: Pedersen, Soeren Skovgaard

(57) **Abstract**

A feed dispenser, in particular for pigs, comprising a tubular outlet (2) with a dispensing device (5) with a supported disc-shaped element (7) transversely to the longitudinal direction of the outlet and arranged a distance below the edge of the outlet. To dispens feed, the disc-shaped element is formed with a central hole for a through rod (11) pivotally suspended above the element (7) so that the element (7) may be displaced laterally when the animals affect the end of the depending rod (11) for pivoting. Displacement causes feed to drop beyond the side edges of the element and down into a feed trough. The area of the disc-shaped element (7) substantially corresponds to the area of the outlet so that the element keeps back the feed in its position of rest. The structure of the feed dispenser is simple and reliable in operation.

## Description

The invention relates to a feed dispenser, in particular for pigs, and of the type comprising a tubular outlet with a dispensing device comprising a supported disc-shaped element transversely to the longitudinal direction of the outlet and arranged a distance below the edge of the outlet, said disc-shaped element being formed with a central hole for a through rod pivotally suspended above the element "so that the element may be displaced laterally when the animals affect the end of the depending rod for swinging.

Feed dispensers comprising a tubular outlet with a dispensing device which the animals can affect with the nose, are well-known, and as examples of this reference may be made to WO 95/19104 which concerns a feed dispenser with a funnel-shaped outlet accommodating a ball which the animals can lift with the nose to cause feed to run out through the gap between the ball and the inner side of the funnel. A structure corresponding to this is known from US-A 4 799 455 in which a cone-shaped element is used instead of a ball. The functioning of the structure, however, is influenced by the general problem of bridge formation in feeds, and the phenomenon is particularly pronounced in very fat-rich pig feeds. The feed forms a bridge across the outlet and keeps back the feed in the feed dispenser. WO 93/13652 discloses a feed dispenser in which the outlet is formed by a deflectable depending pipe which terminates just above a plateau. When the pigs push the pipe, it deflects, and a little feed runs out on the plateau from which the pigs can lick it up. Owing to the repeated deflections the pipe is of course greatly liable to fatigue fractures. WO 96/16537 discloses a feed dispenser in which it is attempted to avoid the problem of fatigue fractures by a separate dispensing device, but here, too, problems of bridge formation in the outlet occur.

DE 29 13 511 B discloses a feed dispenser with a springloaded stem which carries a plate covering feed outlet holes. When the animals affect the end of the stem, the plate capsizes so that feed can run out. As the outlet holes are relatively small, the feed forms a bridge relatively easily, and, moreover, feed can penetrate between the boundaries of the outlet and the plate so that the outlet will be open.

GB 2 283 897 A discloses a similar feed dispenser, in which the plate is positioned above the outlet opening, so that the plate is affected by the weight of the feed for closure. The dispensing of feed is relatively uncontrolled in this structure, and feed may sift out of the dispenser as the plate works up into the feed.

EP 0 399 305 Al discloses a feed dispenser arranged such that a relatively thick slidable element, with its edge, pushes feed beyond the rim of a fixed plate which keeps back the feed. The element is positioned loosely on the support plate, which involves the risk that the element will gradually be wedged up during the movements of the element because of the penetration of feed below the element, which makes the feed dispenser inoperative. The dispensed feed amount also depends on the thickness of the slidable element.

The object of the invention is to provide a feed dispenser of the type mentioned in the opening paragraph which is of a simple structure and gives a reliable metering of feed, while obviating the problems of the known dispensers.

By the invention there is provided a feed dispenser, in particular for pigs and of the type comprising a tubular outlet with a dispensing device comprising a supported disc-shaped element transversely to the longitudinal direction of the outlet and arranged a distance below the edge of the outlet, said disc-shaped element being formed with a central hole for a through rod pivotally suspended above the element, so that the element may be displaced laterally when the animals affect the end of the depending rod for swinging, characterized in that the area of the disc-shaped element substantially corresponds to the area of the outlet so that the element keeps back the feed in its position of rest. The feed here rests directly on the disc-shaped element, and upon lateral displacement feed will drop or be pushed laterally out below the edge of the outlet. There are no constrictions in the outlet or other restrictions that may cause bridge formation in the feed. The function of the feed dispenser will not be disturbed either by feed penetrating below the disc-shaped element, as is the case in EP 0 399 305 Al, and the dispenser is also independent of the thickness of the slidable element. Like in EP 0 399 305 Al, no additional measures are necessary here to make the feed run out. The feed dispenser of the invention can readily be arranged so as to be operated from all sides.

To protect the movable parts, a housing is arranged at the end of the outlet, said housing surrounding the disc-shaped element and being formed so that the pivotally rod depends downwards out through an opening in the housing through which the dispensed feed can simultaneously run out. The disc-shaped element is expediently provided in the housing, which facilitates mounting and service.

The structure offers several different possibilities of adjusting the metered amount of feed, it being e.g. possible to adjust the gap between the lower edge of the tubular outlet and the disc-shaped element in that the tubular outlet and the disc-shaped element are axially slidable with respect to each other. The housing, as such, may be fixed to the end of the outlet so as to be slidable up and down. Another possibility is to provide the outlet with a height-adjustable ring. Displacement of the suspension point of the rod will also result in dispensing of more or less feed. Furthermore, it is possible to vary the size of the disc with respect to the cross-section of the outlet. The size of the gap and the size of the element, however; must be adapted such that the feed does not run out of the dispenser by itself.

It has been found that in case of feeds of a small grain diameter, such as for piglets, feed may sift out of the outlet by itself, which is not desirable of course. This is obviated by a special embodiment, in which the height-adjustable ring and the suspension point of the pivotally rod are coupled together via a gear so that displacement of the pivotally rod causes a simultaneous, preferably smaller, displacement of the ring. This provides great control of the metering, i.e. it is ensured that feed runs out only when the dispenser is activated.

To counteract formation of a cone of old feed in the centre of the disc-shaped element in the feed dispenser of the invention, said element is given a dome shape so that the feed can slide from the centre down toward the outer edge.

In a preferred embodiment of the feed dispenser, the tubular outlet and the disc-shaped element are cylindrical, preferably circular.

The disc-shaped element expediently rests on a support of wires, preferably a cross of wires, thereby additionally preventing feed from penetrating between the element and the support, which might otherwise counteract the movement of the element and at worst cause wedging.

An embodiment of the invention will be described more fully below with reference to the accompanying drawings, in which:

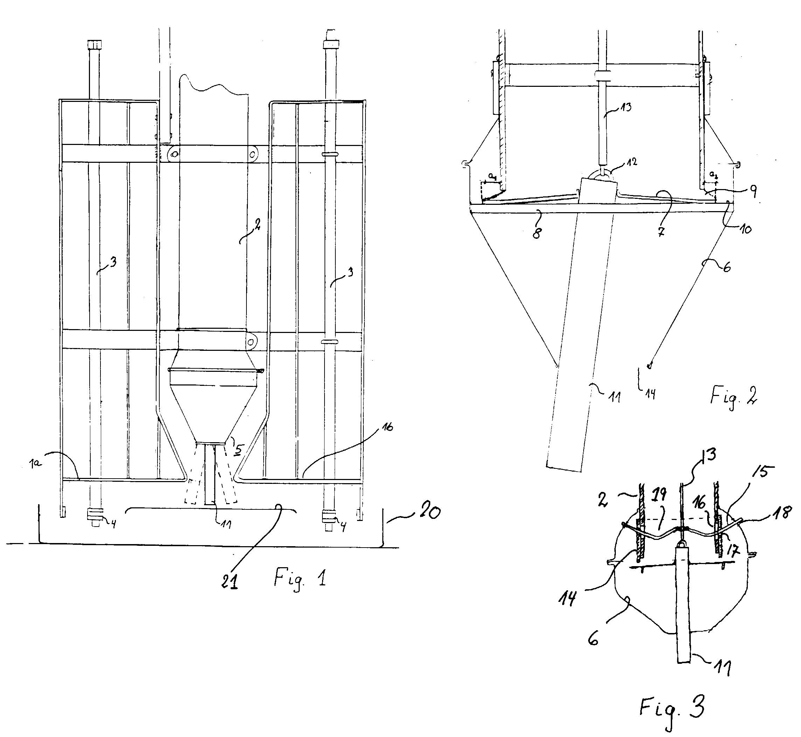

fig. 1 is a direct lateral view of a feed dispenser,
fig. 2 is an enlarged cross-section of the feed outlet in the dispenser, in which the activating means has been pushed way from the position of rest in the centre, and
fig. 3 is a cross-section through the feed outlet in a second embodiment of the dispenser of the invention.

The feed dispenser shown in the drawing is intended to be placed in the boundary between two sties for piglets. In the drawing, 20 schematically designates a trough below side gratings la, 1b and a feed pipe 2, of which only the lower end, which is relevant to the invention, is shown. A water pipe 3 is provided in the side gratings, terminating downwardly in a drinking valve 4, above the bottom of the feed trough. The feed pipe 2 is connected with an automatic feeding system known per se, in which the feed from a silo is conveyed by a conveyor to the individual feed dispensers. In the trough, the feed drops vertically down on a plateau 21.

A dispensing device 5 is provided at the end of the pipe, comprising a housing 6 with a circular plate element 7 which rests loosely on a cross 8 of two round bars. To prevent the feed from running by itself out through the slot 9 between the lower edge of the pipe 2 and the upper side of the plate element 7, the plate element extends past the feed pipe 2. The length of the protruding portion depends on the height of the slot and the angle of slide of the feed. The housing is even larger, there being a ring slot 10 between the inner wall of the housing and the plate element 7 through which the dispensed feed can run.

The centre of the plate element 7 is formed with a hole for a depending length of pipe 11 which forms the activation means of the feed dispenser, said length of pipe extending downwardly out of the housing 6 so that the pigs can affect the length of pipe with the snout. The length of pipe 11 is pivotally suspended at the end of a longitudinally slidable adjustment rod 13. When the length of pipe 11 pivots, it displaces the plate element 7 laterally, whereby the part present in the edge area will be carried along outside the feed pipe 2. At the opposite side, a greater part of the edge area of the plate element will be moved further inwards below the pipe, whereby feed settles thereon. When the plate element swings back, the feed on the first-mentioned advanced edge area will drop beyond the plate edge as it retracts, and the feed will drop through the slot 10 and trickle through the funnel-shaped mouth 14 of the housing 6. At the opposite side, the feed which has settled on the retracted edge area will be carried along out through the slot 9 below the feed pipe 2, and the amount lying above the angle of slide of the feed will, by itself, drop beyond the plate edge and down.

The dispensed amount of feed may be adjusted by raising or lowering the suspension point 12 of the length of pipe, which takes place by displacing the rod 13 axially. For this purpose, the upper end of the rod may e.g. be provided with threads and a hand wheel, and in this connection there may be an empirically determined scale for the amount of feed. When the rod 13 is raised, the lateral displacement of the plate element 7 is increased, as this will be disposed further down on the length of pipe 11, and vice versa when the length of pipe is lowered. It is a distinguishing feature of the invention in general that the displacement takes place according to a linear scale.

To reduce the risk of a cone of old feed being left on the plate element 7, the central part of it is bent upwards, which makes the feed at the centre slide outwards toward the edge area, which is plane. To obtain a greater effective face between the length of pipe 11 and the plate element 7, the hole in the centre is formed with a collar, which also reduces the wear on the hole edge and the pipe.

As will appear, the structure is essentially free of obstructing constrictions and structural elements so that there is a free flow of feed through the feed pipe 2.

The slot 9 between the plate element 7 and the lower edge of the feed pipe 2 may be adjusted by displacing the attachment of the housing 6 on the feed pipe 2, thereby allowing a basic adjustment of the dispensing device.

Fig. 3 shows another structure, in which a telescopically slidable ring 14 is mounted on the end of the feed pipe 2. Two diametrically directed arms 15 are hingedly connected with the rod 13 carrying the pivotally length of pipe 11, which arms pass through a slot 16 in the feed pipe 2 and extend through a hole 17 in the ring to emerge with the end through a guide hole 18 in the housing 6. The arms are here formed with a downwardly directed bend 19 to obtain a desired gear. The gear may e.g. be selected so that the ring is displaced about 14 mm when the length of pipe is displaced about 30 cm. When the pivotally length of pipe 11 is raised by moving the rod 13 upwards, the ring 14 is raised at the same time, but through a smaller distance because of the gear. A larger amount of feed will hereby be metered. When the rod 13 is pushed downwards, the pivotally length of pipe 11 is lowered, and the ring is lowered at the same time so that a smaller amount of feed is metered. As the ring slot 9 below the feed pipe is constricted at the same time, this prevents sifting of feed out through the outlet, also in case of feed with a small grain diameter.

It is noted that the activation means is here a length of pipe 11, but the structure may be adapted to specific needs of course, as the length of pipe may e.g. be replaced by a solid rod, just as it may terminate in a ball so that the pigs have a larger activation face.

## Claims

1. A feed dispenser, in particular for pigs and of the type having a tubular outlet (2) with a dispensing device (5) comprising a supported disc-shaped element (7) arranged transversely to the longitudinal direction of the outlet a distance below the edge of the outlet, said disc-shaped element being formed with a central hole for a through rod (11) pivotally suspended above the element (7) so that the element (7) is displaced laterally when the animals affect the end of the depending rod (11) for pivoting, **characterized** in that the area of the disc-shaped element (7) substantially corresponds to the area of the outlet so that the element keeps back the feed in its position of rest.

2. A feed dispenser according to claim 1, **characterized** in that a housing (6) surrounding the disc-shaped element (7) is provided at the end of the outlet, and that the pivotally rod (7) depends downwards out through an opening (14) in the housing through which the dispensed feed can simultaneously run out.

3. A feed dispenser according to claim 2, **characterized** in that the disc-shaped element (7) is mounted in the housing (6).

4. A feed dispenser according to claim 1, 2 or 3, **characterized** in that the tubular outlet (2) and the disc-shaped element (7) are axially displacable with respect to each other to adjust the size of the outlet slot (9) between these.

5. A feed dispenser according to claim 4, **characterized** in that the end of the tubular outlet (2) is provided with a height-adjustable ring, preferably mounted on the outer side of the outlet (2).

6. A feed dispenser according to claim 1, **characterized** in that the suspension point (12) of the pivotally rod (11) is axially adjustable.

7. A feed dispenser according to claims 5 and 6, **characterized** in that the height-adjustable ring and the suspension point of the pivotally rod (11) are coupled together via a gear so that displacement of the pivotally rod (11) causes a simultaneous, preferably smaller displacement of the ring.

8. A feed dispenser according to claim 1, **characterized** in that the disc-shaped element (7) is dome-shaped so as to slope from the centre downwards toward the outer edge.

9. A feed dispenser according to claim 1 or 2, **characterized** in that the tubular outlet and the disc-shaped element have a cylindrical, preferably circular cross-section.

10. A feed dispenser according to claim 1, 3 or 9, **characterized** in that the disc-shaped element (7) rests on a support of wires, preferably a cross of wires (8).
